(19) Europäisches Patentamt
European Patent Office
Office européen des brevets

(11) **EP 4 234 957 A1**

(12) **EUROPEAN PATENT APPLICATION**

(43) Date of publication:
**30.08.2023 Bulletin 2023/35**

(51) International Patent Classification (IPC):
**F16B 13/14** (2006.01)     **F16B 13/06** (2006.01)

(21) Application number: **22159149.8**

(52) Cooperative Patent Classification (CPC):
**F16B 13/141; F16B 13/065**

(22) Date of filing: **28.02.2022**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Hilti Aktiengesellschaft**
**9494 Schaan (LI)**

(72) Inventors:
• **Spampatti, Matteo**
  **9470 Buchs (CH)**
• **Shimahara, Hideki**
  **9472 Grabs (CH)**
• **Loher, Markus**
  **9000 St. Gallen (CH)**

(74) Representative: **Hilti Aktiengesellschaft**
**Corporate Intellectual Property**
**Feldkircherstrasse 100**
**Postfach 333**
**9494 Schaan (LI)**

(54) **EXPANSION ANCHOR AND BOREHOLE FILLING**

(57)     The invention relates to a method for installing an expansion anchor (1) in a borehole,
wherein the expansion anchor (1) comprises
a bolt (2) with an expansion region (3) at the frontal end (4) and a neck region (5, wherein the expansion region (3) adjoins the neck region (5) and tapers to the neck region (5),
an expansion sleeve (6) at least partially surrounding the neck region (6), and
a thread (7) for a nut (8) at the rear end (9),

the method comprising the steps of
a) filling mortar into the borehole,
b) inserting the expansion anchor (1) into the borehole with the frontal end (4) first,
c) applying a torque to withdrawn the expansion anchor (1) a short distance out of the bore hole, such that the expansion sleeve (6) is radially expanded, and
d) hardening and/or curing the mortar to obtain the installed expansion anchor (1),
wherein the nominal diameter of the thread (7) is at least >95% of the diameter of the bore hole, and
wherein in the installed expansion anchor, the filling height A of the mortar is at least up to the rear end of the neck region (5).

The invention also relates to a mounting system comprising the installed expansion anchor.

Fig. 1

EP 4 234 957 A1

**Description**

The invention relates to an expansion anchor which is installed with mortar. The expansion anchor is equipped with a bolt having a neck region and an expansion region adjoining the neck region.

Expansion anchors are known for example from DE 101 08 844 A1. They are used in a drilled hole in a substrate, for example, in a wall or ceiling of a component. By retraction of the expansion area of the bolt, the expansion sleeve is radially expanded, and the expansion anchor is anchored into the underlying material. Typically, the bolt of such an expansion anchor has a substantially circular cross-section.

The strength and performance of expansion anchors can be increased by a mortar. Mortars are adhesive pastes or liquids which are cured or hardened and bind the expansion anchor to the substrate. DE 10 2006 000 475 A1 and DE 103 60 156 A1 relate to the installation of expansion anchors in combination with a mortar. The mortar can be added into the borehole after the expansion anchor. Typically, such expansion anchors comprise means, such as grooves or slits, which support the passage of the mortar towards the end of the borehole.

Such systems with expansion anchors in combination with mortar could still be improved. Typically, the borehole diameter is relatively large, such that the anchor and mortar can be conveniently installed. However, the strength and performance of the expansion anchor can be reduced, if the borehole is relatively wide. It can be another problem that the expansion anchor cannot spread adequately if surrounded by mortar. However, if the expansion anchor is installed before the mortar, it can be difficult to distribute the mortar uniformly. In some systems, the amount of mortar used is relatively low, such that only relatively small regions of the expansion anchor can be attached to the borehole wall. Overall, there is a need for improved systems, in which the strength and performance is optimized and improved.

It is a problem underlying the invention to provide methods and expansion anchors which overcome the problems outlined above. It is a specific problem to provide an expansion anchor having high strength and performance.

The problem is solved by methods and mounting systems according to the claims. Further embodiments are outlined in the description.

Subject of the invention is a method for installing an expansion anchor in a borehole,

wherein the expansion anchor comprises

a bolt with an expansion region at the frontal end and a neck region, wherein the expansion region adjoins the neck region and tapers to the neck region,
an expansion sleeve at least partially surrounding the neck region, and a thread for a nut at the rear end,

the method comprising the steps of

a) filling mortar into a borehole,
b) inserting the expansion anchor into the borehole with the frontal end first,
c) applying a torque to withdrawn the expansion anchor a short distance out of the bore hole, such that the expansion sleeve is radially expanded, and
d) hardening and/or curing the mortar to obtain the installed expansion anchor,

wherein the nominal diameter of the thread is at least >95% of the diameter of the bore hole, and
wherein in the installed expansion anchor, the filling height A of the mortar is at least up to the rear end of the neck region.

According to the invention, the nominal diameter of the thread is at least > 95% of the diameter of the borehole. In a preferred embodiment, the diameter of the thread is at least >98% of the diameter of the bore hole and is preferably about the same as the diameter of the bore hole. The nominal diameter is the outer diameter, which determines if the thread can enter the borehole. Typically, the thread is at least the external thread, which is not inside the borehole. Preferably, the thread is uniform and has a uniform diameter.

It was found that it is advantageous if the outer diameter of the thread is highly similar or even identical to the diameter of the borehole. In conventional systems, the diameter of the borehole is typically significantly larger than the nominal diameter of the thread. The reason is that it is generally presumed that ample space should be available for passaging and filling mortar between the borehole wall, thread and bolt. For example, it is common practice to combine an M14 drill bit hole with an M12 threaded connection. According to the present invention, it was found that the diameter of the borehole and thread can be highly similar or even identical. For example, an M12 threaded connection can be combined with an M12 borehole. The reason is that in combination with optimization of filling height A of the mortar, a high performance can be obtained even if the space between thread and bolt on the one hand and borehole wall on the other hand is very small. This is advantageous, because a strong anchor system can be provided in a relatively thin borehole. Further, a higher performance can be provided in a borehole which has the same diameter as in the art.

Preferably, the nominal diameter of the thread is not more than 100% of the diameter of the borehole. When the diameter is larger, the installing method can be impaired, in which the expansion anchor is inserted and slightly withdrawn from the borehole by applying a torque.

When the expansion anchor is installed, the filling height A of the mortar is at least up to the rear end (upper end) of the neck region. In step a), mortar is filled into the borehole, preferably at the bottom. When the expansion anchor is inserted and pressure is applied, the mortar is squeezed towards the borehole opening until it reaches filling height A. The filling height is such that the height of the mortar at least extends over the neck region. Since the neck region has a smaller diameter than other regions of the bolt, a strong bond can be obtained if the space around the neck is completely filled with mortar.

According to the invention, the filling height A of the mortar can be higher than the neck region. In a preferred embodiment, the filling height A of the mortar is $\leq 3$ mm from the end of the borehole (borehole opening), preferably less than 5 mm, or less than 10% of the borehole height. If more mortar would be used, the thread could contact the mortar, which could impair the application of the fixture or nut outside the borehole. By maintaining an upper region free from mortar, the mortar load can be adjusted to achieve high performance and strength.

In a preferred embodiment, the bolt comprises a collar adjoining the rear end (upper end) of the neck. The collar has a higher diameter than the neck region. The collar concludes the neck region and can function as a barrier for the axial movement of the expansion sleeve.

In a preferred embodiment, the filling height A of the mortar is at least up to the rear end (upper end) of the collar. In this embodiment, the mortar extends over the neck region and the collar. In a preferred embodiment, the filling height A can is above the collar. Filling mortar above the collar is advantageous, because thereby the weak point of the bolt (the steel failure point) can be moved from the neck region to the thread. This means that a steel failure will occur in the thread region instead of the neck region, because the mortar provides additional strength and resistance. Overall, the performance of the expansion anchor system can significantly be increased thereby.

In a preferred embodiment, the minimum volume $\mathrm{Vol_{min}}$ mortar is calculated by formula (1):

$$\mathrm{Vol_{min}} = 0.95 \text{ x } (h_o - h_{nom}) \text{ x } \pi \text{ x } \frac{d_0^2}{4} + L \text{ x } \pi \text{ x } \frac{d_0^2}{4} \text{ x } 0.05$$

wherein

> $h_o$ is the borehole length,
> $d_0$ is the borehole diameter,
> $h_{nom}$ is the length of the section of expansion anchor 1 which is in the borehole, and
> L is the length of the section of the expansion anchor from its front end to the collar rear end (upper end).

$\mathrm{Vol_{min}}$ is the amount which is filled into the borehole, and remains in the installed anchor system. It was found that especially high performance and strength of the expansion mortar can be obtained, when the minimum volume of mortar is adjusted according to the formula.

Typically, the bolt comprises specific voids, through which the mortar can penetrate the borehole towards the upper region, when the anchor is inserted and exerts pressure on the mortar; such as slits or grooves, which can be arranged in parallel. Specifically, the broader sections, such as the expansion region and collar, can comprise such voids. Alternatively, the bolt and/or regions thereof can be slightly narrower than the borehole, such that the mortar can pass through the narrow space in between. Further, the mortar can pass the void space of a thread.

The mortar functions as an adhesive in the anchor system. The mortar is preferably a chemical mortar which is cured by chemical reaction. Upon curing, the organic polymers are crosslinked and form a polymer matrix in which the inorganic filler is dispersed. For example, the mortar can be an epoxy, acrylic, polyurethane, or silicone mortar. The mortar is preferably a two-component adhesive, which is rapidly cured after combining the components and inserting them into the borehole. The mortar may comprise additives, such as thickener, catalyst or diluents. Typically, the mortar does not comprise a solvent. Alternatively, the mortar can be an inorganic mortar, such as cement.

In a preferred embodiment, the method comprises a preceding step of drilling the borehole. In a preferred embodiment, the method comprises a final step of applying a fixture to the installed expansion anchor. For example, the fixture can be a structural element or a building component. The substrate, in which the borehole is drilled, can be a hard material, such as concrete or stone.

Subject of the invention is also a mounting system comprising a substrate having a borehole and an expansion anchor (1) installed in the borehole, wherein the expansion anchor comprises

a bolt with an expansion region at the frontal end and a neck region, wherein the expansion region adjoins the neck region and tapers to the neck region,
an expansion sleeve at least partially surrounding the neck region, which is radially expanded, and
a thread for a nut at the rear end,

wherein the borehole comprises hardened and/or cured mortar,
wherein the diameter of the thread is at least >95% of the diameter of the bore hole, and
wherein the filling height A of the mortar extends at least up to the rear end of the neck region.

Preferably, the mounting system is obtained by a method as outlined above. The mounting system comprises the installed expansion anchor. Subject of the invention is also an installed expansion anchor, which is obtained by a method as defined above. In an preferred embodiment, the mounting system comprises a fixture, which is fixed to the expansion anchor.

The above embodiments and aspects of the invention are outlined further in the following examples and figures. The figures are schematic and the dimensions could be, but are not necessarily, drawn to scale.

Fig. 1    shows an embodiment of an expansion anchor and system of the invention.
Fig. 2    shows an embodiment as in Fig. 1, in which regions of the expansion anchor and borehole are indicated in schematic form.

Detailed description of embodiments

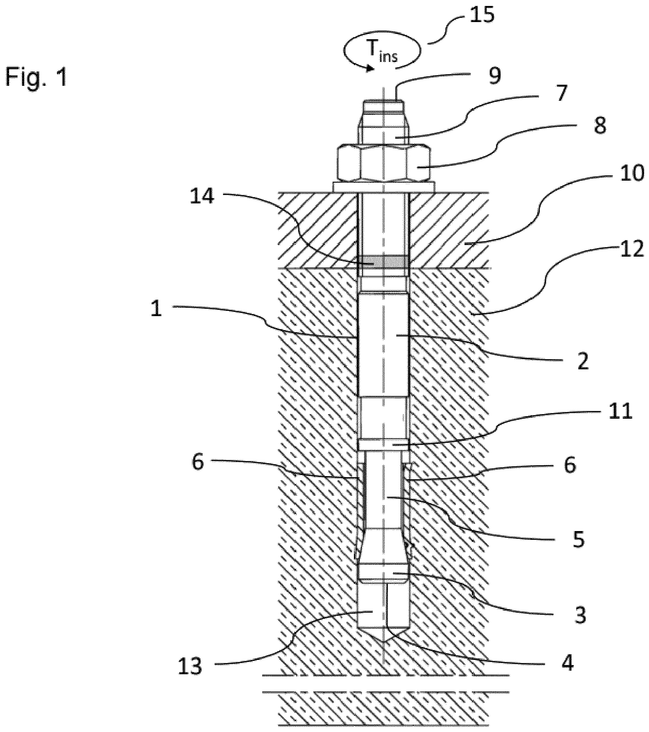

Fig. 1 shows an embodiment of an expansion anchor 1 according to the invention. The expansion anchor 1 has a bolt 2 and an expansion sleeve 6 which surrounds the bolt 2.

The bolt 2 has a neck region 5 having a substantially constant cross-section and connected to neck region 5 in the front end 4 (lower end, towards the borehole bottom) of the bolt 2, an expansion region 3 for the expansion sleeve 6, in which the bolt 2 widens from the neck area 5 to its front end 4. On the side of the neck region 5 opposite the expansion region 3, the bolt 2 can have a collar 11 for the expansion sleeve 6 formed, for example, as an annular shoulder. At its rear end region 9 (upper end) opposite expansion region 3, the bolt 2 is provided with an external thread 7 for a nut 8. By means of the nut 8, a fixture 10 can be fixed to the substrate 12.

The borehole has been filled with mortar at the bottom. When installing the expansion anchor 1, the bolt 2 with expansion region 6 is advanced in the direction of the longitudinal axis of the bolt 2 into a drilled borehole in substrate 10. The expansion sleeve 6 is thereby also introduced into the hole, preferably due to collar 11. By tightening the nut 8, a torque can be applied in direction 15, and the bolt 2 is withdrawn a short distance from the borehole, such as between 1% to 10% of the length of the expansion anchor. Because of its friction with the drilled-hole wall, the expansion sleeve 6 stays back and displacement of the bolt 2 relative to the expansion sleeve 6 occurs, in which the expansion region 3 of bolt 2 penetrates into the expansion sleeve 6, so that it is radially expanded by the expansion region 3 and pressed towards the borehole wall. Through this mechanism, the expansion anchor 1 is fixed in the substrate 10. Further, the mortar has been pressed upwards in the borehole by the expansion anchor and its further movement. In a preferred embodiment, a setting depth mark 14, for example a color mark, marks a region which should not be filled with mortar.

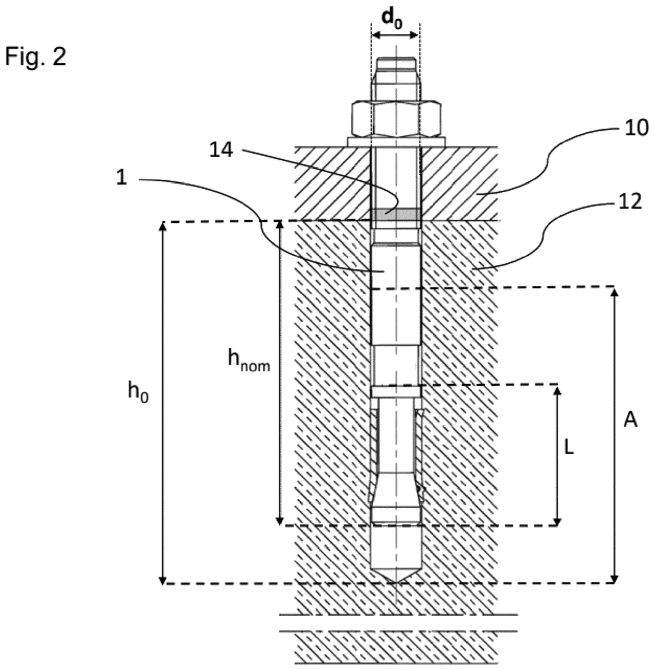

Fig. 2 shows in schematic and exemplified form an expansion anchor 1 according to the invention with features as outlined above for Fig. 1. The expansion anchor 1 attaches a fixture 10 to substrate 12. The borehole length ho and the nominal borehole diameter do are indicated. It can be seen that $h_{nom}$ is smaller than $h_0$, because the front end of the expansion anchor is not in contact with the bottom of the borehole. The intermediate space is formed when withdrawing the expansion anchor slightly to expand the expansion sleeve. The distance L is the section from the front end of the bolt to the rear end of the collar. The filling height A of the mortar extends from the bottom of the borehole to the upper end of the mortar filling. In the exemplary embodiment shown, the upper end of the filling height A is above the collar, but significantly below the borehole opening, preferably ≤ 3 mm or less than 10% of the borehole length.

Examples 1 to 6

The minimum, maximum and ideal volume mortar to be filled into boreholes for expansion anchors was calculated for commercially available expansion anchors of trademark HST3, types M8 to M24 (Hilti, LI). The dimensions regarding height and volume are summarized in table 1. A maximum mortar filling volume can be calculated for each type, which is the total void space. The minimum volume is the amount required for covering the neck region, and herein also the collar region, with mortar. An ideal minimum amount $Vol_{min}$ can be calculated for each type by formula (1) above (last column). The results demonstrate that the ideal volume can be relatively high and provide a strong bond and performance. It is advantageous that the minimum or ideal amount can be calculated for a given system. Thereby, failures by trial and error, non-optimal amounts and undesirable variations of quality and performance at a construction site can be reduced and avoided.

Table 1: dimensions of extension anchors and mortar volumes of examples 1 to 6

| Ex. | Type | Borehole diameter do | Borehole depth ho | Hnom [mm] | Collar length | borehole volume total | anchor volume total | borehole volume above collar | anchor volume above collar | max volume mortar | min volume mortar | $Vol_{min}$ by formula (1) |
|---|---|---|---|---|---|---|---|---|---|---|---|---|
| | | [mm] | [mm] | [mm] | [mm] | [mm$^3$] | [mm$^3$] | [mm$^3$] | [mm$^3$] | [mm$^3$] | [mm$^3$] | [mm$^3$] |
| 1 | M8 | 8 | 59 | 54 | 22 | 2747 | - | 1257 | - | - | - | - |
| 2 | M10 | 10 | 73 | 68 | 26.5 | 5395 | - | 2328 | - | - | - | - |
| 3 | M12 | 12 | 88 | 80 | 32.5 | 9300 | 8140 | 4280 | 3324 | 1160 | 956 | 1043 |
| 4 | M16 | 16 | 106 | 98 | 40.5 | 20521 | 17550 | 9389 | 7170 | 2971 | 2219 | 1935 |
| 5 | M20 | 20 | 124 | 116 | 47.5 | 37413 | 31655 | 16745 | 13262 | 5758 | 3483 | 3134 |
| 6 | M24 | 24 | 151 | 143 | 53 | 66053 | 59314 | 26684 | 20696 | 6739 | 5988 | 4637 |

**List of reference signs**

| | |
|---|---|
| 1 | expansion anchor |
| 2 | bolt |
| 3 | expansion region |
| 4 | frontal end |
| 5 | neck region |
| 6 | expansion sleeve |
| 7 | thread |
| 8 | nut |
| 9 | rear end |
| 10 | fixture |
| 11 | collar |
| 12 | substrate |
| 13 | void |
| 14 | setting depth mark |
| 15 | direction of torque / nut turn |

**Claims**

1. A method for installing an expansion anchor (1) in a borehole,

   wherein the expansion anchor (1) comprises

   a bolt (2) with an expansion region (3) at the frontal end (4) and a neck region (5), wherein the expansion region (3) adjoins the neck region (5) and tapers to the neck region (5),
   an expansion sleeve (6) at least partially surrounding the neck region (6), and
   a thread (7) for a nut (8) at the rear end (9),

   the method comprising the steps of

   a) filling mortar into the borehole,
   b) inserting the expansion anchor (1) into the borehole with the frontal end (4) first,
   c) applying a torque to withdrawn the expansion anchor (1) a short distance out of the bore hole, such that the expansion sleeve (6) is radially expanded, and
   d) hardening and/or curing the mortar to obtain the installed expansion anchor (1),

   wherein the nominal diameter of the thread (7) is at least >95% of the diameter of the bore hole, and
   wherein in the installed expansion anchor, the filling height A of the mortar is at least up to the rear end of the neck region (5).

2. The method of claim 1, wherein the wherein the nominal diameter of the thread (7) is at least >98% of the diameter of the bore hole, and is preferably about the same as the diameter of the bore hole.

3. The method of at least one of the preceding claims, wherein the filling height A of the mortar is ≤ 3 mm from the end of the borehole.

4. The method of at least one of the preceding claims, wherein the bolt (2) comprises a collar (11) adjoining the rear end of neck region (5).

5. The method of claim 4, wherein the filling height A of the mortar is at least up to the rear end of the collar (11).

6. The method of at least one of claims 4 and 5, wherein the minimum volume $Vol_{min}$ of mortar is:

$$\text{Vol}_{min} = 0.95 \text{ x } (h_o - h_{nom}) \text{ x } \pi \text{ x } \frac{d_0^2}{4} + L \text{ x } \pi \text{ x } \frac{d_0^2}{4} \text{ x } 0.05$$

wherein

ho is the borehole length,
$d_0$ is the nominal borehole diameter,
$h_{nom}$ is the length of the section of expansion anchor (1) which is in the borehole, and
L is the length of the section of the expansion anchor from its front end to the collar rear end.

7. The method of at least one of the preceding claims, wherein the mortar is a chemical mortar.

8. The method of at least one of the preceding claims, comprising a preceding step of drilling the borehole.

9. The method of at least one of the preceding claims, comprising a final step of applying a fixture to the installed expansion anchor (1).

10. A mounting system comprising a substrate having a borehole and an expansion anchor (1) installed in the borehole, wherein the expansion anchor comprises a bolt (2) with an expansion region (3) at the frontal end (4) and a neck region (5), wherein the expansion region (3) adjoins the neck region (5) and tapers to the neck region (5),

an expansion sleeve (6) at least partially surrounding the neck region (5), which is radially expanded, and a thread (7) for a nut (8) at the rear end (9),

wherein the borehole comprises hardened and/or cured mortar,
wherein the nominal diameter of the thread is at least >95% of the diameter of the bore hole, and
wherein the filling height A of the mortar extends at least up to the rear end of the neck region.

11. The mounting system of claim 10, comprising a fixture (10) which is fixed to the expansion anchor (1).

Fig. 1

Fig. 2

Europäisches
Patentamt

European
Patent Office

Office européen
des brevets

# EUROPEAN SEARCH REPORT

Application Number

**EP 22 15 9149**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | DE 103 60 156 A1 (ATRION DUEBELTECHNIK GMBH & CO [DE]) 21 July 2005 (2005-07-21) | 1,2,4,5, 7-11 | INV. F16B13/14 F16B13/06 |
| Y | * the whole document * | 3,6 | |
| Y | DE 102 16 897 A1 (FISCHER ARTUR WERKE GMBH [DE]) 6 November 2003 (2003-11-06) * the whole document * | 3,6 | |
| A | EP 3 159 554 A1 (HILTI AG [LI]) 26 April 2017 (2017-04-26) * the whole document * | 1-11 | |
| A | EP 1 333 184 A2 (FISCHER ARTUR WERKE GMBH [DE]) 6 August 2003 (2003-08-06) * the whole document * | 1-11 | |

TECHNICAL FIELDS
SEARCHED      (IPC)

**F16B**

The present search report has been drawn up for all claims

| Place of search | Date of completion of the search | Examiner |
|---|---|---|
| Munich | 21 June 2022 | Pirog, Pawel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 15 9149

This annex lists the patent family members relating to the patent documents cited in the above-mentioned European search report.
The members are as contained in the European Patent Office EDP file on
The European Patent Office is in no way liable for these particulars which are merely given for the purpose of information.

21-06-2022

| Patent document cited in search report | | Publication date | Patent family member(s) | | Publication date |
|---|---|---|---|---|---|
| DE 10360156 | A1 | 21-07-2005 | NONE | | |
| DE 10216897 | A1 | 06-11-2003 | NONE | | |
| EP 3159554 | A1 | 26-04-2017 | CA | 3001501 A1 | 27-04-2017 |
| | | | CN | 108138826 A | 08-06-2018 |
| | | | EP | 3159554 A1 | 26-04-2017 |
| | | | EP | 3365565 A1 | 29-08-2018 |
| | | | ES | 2730526 T3 | 11-11-2019 |
| | | | TW | 201715154 A | 01-05-2017 |
| | | | US | 2018313384 A1 | 01-11-2018 |
| | | | WO | 2017067945 A1 | 27-04-2017 |
| EP 1333184 | A2 | 06-08-2003 | AT | 294931 T | 15-05-2005 |
| | | | DE | 10204591 A1 | 14-08-2003 |
| | | | EP | 1333184 A2 | 06-08-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10108844 A1
- DE 102006000475 A1

- DE 10360156 A1